# EUROPÄISCHE PATENTSCHRIFT

(11) **EP 1 135 434 B1**
(45) Veröffentlichungstag und Bekanntmachung des Hinweises auf die Patenterteilung: **16.06.2004**
(21) Anmeldenummer: 99961025.6
(22) Anmeldetag: 29.11.1999
(51) Int. Cl.: C08K 5/103

(54) **FORMMASSEN AUF BASIS VON POLY-C 2-6-ALKYLENTEREPHTHALATEN**
MOULDING SUBSTANCES BASED ON POLY-C 2-6-ALKYLENE TEREPHTHALATES
MATIERES A MOULER A BASE DE VON POLY-C 2-6-ALKYLENTEREPHTHALATES

(30) Priorität: 02.12.1998 DE 19855599
(43) Veröffentlichungstag der Anmeldung: 26.09.2001
(73) Patentinhaber: BASF AKTIENGESELLSCHAFT, 67056 Ludwigshafen (DE)
(72) Erfinder: FISCHER, Michael, D-67071 Ludwigshafen (DE); FISCH, Herbert, D-67157 Wachenheim (DE); NAM, Michael, D-80992 München (DE)
(74) Vertreter: Isenbruck, Günter, Dr.
(86) Internationale Anmeldenummer: PCT/EP1999/009269
(87) Internationale Veröffentlichungsnummer: WO 2000/032685

(56) Entgegenhaltungen:
- EP-A- 0 492 550
- US-A- 4 421 804
- US-A- 5 356 972
- CHEMICAL ABSTRACTS, vol. 108, no. 4, 25. Januar 1988 (1988-01-25) Columbus, Ohio, US; abstract no. 22659, PERCELL, KIM S. : "Selective fatty chemicals as mold-release agents" XP002135384 & PLAST. ENG., Bd. 43, Nr. 9, 1987, Seiten 33-36,
- CHEMICAL ABSTRACTS, vol. 117, no. 20, 16. November 1992 (1992-11-16) Columbus, Ohio, US; abstract no. 193083, MOCHIZUKI, MITSUHIRO: "Polyester molding compositions" XP002135385 & JP 04 120162 A (POLYPLASTICS) 21. April 1992 (1992-04-21)
- CHEMICAL ABSTRACTS, vol. 86, no. 18, 2. Mai 1977 (1977-05-02) Columbus, Ohio, US; abstract no. 122331, INATA, HIROO: "Polyester injection-molding compositions" XP002135387 & JP 51 148745 A (TEIJIN) 21. Dezember 1976 (1976-12-21)
- CHEMICAL ABSTRACTS, vol. 126, no. 19, 12. Mai 1997 (1997-05-12) Columbus, Ohio, US; abstract no. 251918, FUJE, HIROKI: "Polybutylene terephthalate composition pellets with good molding stability" XP002135388 & JP 09 053005 A (TEIJIN) 25. Februar 1997 (1997-02-25)

## Beschreibung

Die Erfindung betrifft Formmassen auf Basis von Poly-C₂₋₆-alkylenterephthalaten, die Entformungshilfsmittel enthalten, sowie die Verwendung bestimmter Entformungshilfsmittel in den Formmassen.

Polybutylenterephthalat und Polybutylenterephthalat-Blends werden in großem Umfang durch Extrusions- und Spritzgußverfahren zu Formkörpem verarbeitet. Die Formkörper werden vielfach in Bedarfsgegenständen in den Bereichen Haushalt, Lebensmittel und Medizin eingesetzt. Zur Herstellung der Formkörper werden in der Regel dem Polybutylenterephthalat Additive zugesetzt, die zu einem günstigen Entformungsverhalten führen, das heißt eine kurze Zykluszeit erlauben und eine Formbelagsbildung verhindern. Dabei sollen durch das Additiv die sonstigen anwendungstechnischen Eigenschaften des Polybutylenterephthalats erhalten bleiben.

US 5,356,972 beschreibt Zusammensetzungen aus Polyethylenterephthalat und Glycerintriestem mit ungesättigten Säuren, die mindestens eine C=C-Doppelbindung und eine Hydroxylgruppe aufweisen. Ferner ist die Verwendung der Glycerintriester als Additiv in Polyethylenterephthalat-Formmasen erwähnt.

Bei der Verwendung von Kunststoffen im Bereich von Lebensmitteln und im medizinischen Bereich muß der Übergang von Stoffen aus dem Kunststoff auf die Lebensmittel auf den Körper verhindert werden. Hierzu gibt es beispielsweise Vorschriften der Food and Drug Administration (FDA) in USA und des Bundesgesundheitsamtes (BGA) in der Bundesrepublik Deutschland.

Aufgabe der vorliegenden Erfindung ist die Bereitstellung von thermoplastischen Formmassen auf Basis von Poly-C₂₋₆-alkylenterephthalaten, die ein Entformungshilfsmittel enthalten, das gesundheitlich unbedenklich ist und insbesondere eine niedrige Flüchtigkeit in der Formmasse aufweist.

Die Aufgabe wird erfindungsgemäß gelöst durch Verwendung von Glycerinbisfettsäureestem von C₁₂₋₂₄-Fettsäuren, die eine Hydroxylgruppe und 1 bis 3 C-C-Doppelbindungen aufweisen können, als Zusatz zu Formmassen auf der Basis von Poly-C₂₋₆-alkylenterephthalaten.

Sie werden insbesondere als Entformungshilfsmittel eingesetzt. Die Fettsäuren leiten sich dabei von C₁₂₋₂₄-Fettsäuren, vorzugsweise C₁₄₋₂₀-Fettsäuren, insbesondere C₁₆₋₁₈-Fettsäuren ab, die eine Hydroxylgruppe und 1 bis 3 C-C-Doppelbindungen aufweisen können. Vorzugsweise weisen sie keine, eine oder zwei C-C-Doppelbindungen auf. Wenn sie eine Hydroxylgruppe aufweisen, weisen sie vorzugsweise zusätzlich eine oder zwei C-C-Doppelbindungen auf. Die Fettsäurenreste sind in der Regel linear. Beispiele für in den Glycerinbisfettsäureestem einsetzbare Fettsäuren sind Stearinsäure, Linolsäure, Linolensäure, Ölsäure, Palmitinsäure, Rizinusfettsäure, Nonanonsäure. Andere geeignete Fettsäuren sind dem Fachmann bekannt. Die Herstellung der Glycerinbisfettsäureester kann dabei nach bekannten Verfahren erfolgen.

Insbesondere wird Glycerinbisstearinsäureester als Entformungshilfsmittel eingesetzt. Diese Verbindung ist beispielsweise von Henkel unter dem Handelsnamen Loxiol® VPG 1206 erhältlich. Die erfindungsgemäß eingesetzten Glycerinbisfettsäureester und Glycerinbisstearinsäureester erfüllen die Anforderungen an Verbindungen, die mit Lebensmitteln oder dem menschlichen Körper in Kontakt kommen können.

Glycerinbisstearinsäureester wurden bisher vor allem für die Extrusions- und Spritzgußverarbeitung von Polymeren wie PVC eingesetzt, die bei relativ niedrigen Verarbeitungstemperaturen von weniger als 220°C verarbeitet werden können. Der Grund liegt darin, daß Glycerinbisstearylester eine zunehmende Flüchtigkeit bei höheren Temperaturen aufweisen. So zeigt eine thermogravimetrische Analyse eines Glycerinbisstearylesters einen merklichen Gewichtsverlust ab einer Temperatur von etwa 220°C. Bei 250 bis 270°C, dem Verarbeitungstemperaturfenster für Polybutylenterephthalat und Polybutylenterephthalat-Blends, wird ein Gewichtsverlust von bis zu 5 % gemessen (40 bis 340°C, 10°C/min). Deshalb wurden bisher für Polybutylenterephthalat Entformungshilfsmittel wie Vollester des Pentaerythrits eingesetzt, die unter gleichen Bedingungen eine deutlich geringere Flüchtigkeit aufweisen. So beträgt der Gewichtsverlust für einen Pentaerythritvollester bei 270°C weniger als 1 % (40 bis 340°C, 10°C/min).

Es wurde erfindungsgemäß gefunden, daß Mischungen der vorstehend angegebenen Glycerinbisfettsäureester, insbesondere von Glycerinbisstearylester mit Polybutylenterephthalat eine wesentlich niedrigere Flüchtigkeit des Entformungshilfsmittels aufweisen als es die Flüchtigkeit der Einzelverbindung vermuten ließe. Ohne an eine Theorie gebunden zu sein, kann dies gegebenenfalls darauf zurückgeführt werden, daß der Ester an der Oberfläche eines Formstücks ausreichend gut an Polybutylenterephthalat gebunden wird. Die Eigenschaften von mit Glycerinbisstearinsäureester additiviertem Polybutylenterephthalat unterscheiden sich nicht von den Eigenschaften eines mit bekannten Entformungshilfsmitteln für Polybutylenterephthalat additivierten Polymers. Dies zeigen sowohl thermogravimetrische Messungen als auch Untersuchungen zum Entformungsverhalten und zur Belagsbildung in Werkzeugen bei einer Verarbeitungstemperatur von 260°C, sowie Untersuchungen zur Langzeit-Migration (11 Tage/150°C). Gleichzeitig werden die sonstigen anwendungstechnischen Eigenschaften wie rheologische, mechanische und thermische Eigenschaften nicht nachteilig beeinflußt. Die Mischungen aus den erfindungsgemäß eingesetzten Glycerinbisfettsäureestern und Formmassen auf Basis von Poly-C₂₋₆-alkylenterephthalten können universell sowohl in unverstärkten als auch in verstärkten Formmassen eingesetzt werden.

Die Formmassen basieren dabei auf Poly-C₂₋₆-alkylenterephtalaten. Dabei kann es sich um reine Poly-C₂₋₆-alkylenterephthalate oder Polymerblends daraus handeln. Insbesondere kann es sich um Polybutylenterephthalat oder Polybutylenterephthalat-Blends handeln.

Die Erfindung betrifft auch eine thermoplastische Formmasse, enthaltend, bezogen auf die Summe der Komponenten A und B und gegebenenfalls C bis E, die insgesamt 100 Gew.-% ergibt,
a) 40 bis 99,99 Gew.-% mindestens eines Polyesters auf der Basis von Poly-C₂₋₆-alkylenterephthalaten als Komponente A,
b) 0,01 bis 3 Gew.-% Glycerinbisfettsäureester von C₁₂₋₂₄-Fettsäuren, die eine Hydroxylgruppe und 1 bis 3 C-C-Doppelbindungen aufweisen können, als Komponente B,
c) 0 - 49,99 Gew.-% mit Komponente A mischbare oder in ihr dispergierbare Blendpolymere als Komponente C,
d) 0 bis 50 Gew.-% Füllstoffe als Komponente D, und
e) 0 bis 10 Gew.-% weitere übliche Zusatzstoffe als Komponente E.

### Komponente A

Als Komponente A enthält die erfindungsgemäße Formmasse 40 bis 99,99 Gew.-%, eines Polyesters auf der Basis von Poly-C₂₋₆-alkylenterephthalten. Derartige Polymere sind an sich bekannt.

Die Herstellung der Polyester kann durch Reaktion von Terephthalsäure, deren Estern oder anderer Ester bildender Derivate mit 1,4-Butandiol, 1,3-Propandiol bzw. 1,2-Ethandiol in an sich bekannter Weise erfolgen.

Bis zu 20 mol-% der Terephthalsäure können durch andere Dicarbonsäuren ersetzt werden. Als Beispiele können Naphthalindicarbonsäuren, Isophthalsäure, Adipinsäure, Acelainsäure, Sebacinsäure, Dodecandisäure und Cyclohexandicarbonsäu ren, Mischungen dieser Carbonsäuren und esterbildende Derivate davon genannt werden.

Auch bis zu 20 mol-% der Dihydroxiverbindungen 1,4-Butandiol, 1,3-Propandiol und 1,2-Ethandiol können durch andere Dihydroxiverbindungen wie 1,6-Hexandiol, 1,4-Hexandiol, 1,4-Cyclohexandiol, 1,4-Di(hydroximethyl)cyclohexan, Bisphenol A, Neopentylglycol, Mischungen dieser Diole sowie esterbildende Derivate davon ersetzt werden.

Bevorzugte aromatische Polyester sind Polyethylenterephthalat (PET), Polytrimethylenterephthalat (PTT) und insbesondere Polybutylenterephthalat (PBT), die ausschließlich aus Terephthalsäure und den entsprechenden Diolen gebildet sind. Die aromatischen Polyester können auch ganz oder teilweise in Form von Polyester-Recyclaten, wie PET-Mahlgut aus Flaschenmaterial oder aus Abfällen der Raschenherstellung eingesetzt werden.

### Komponente B

Die erfindungsgemäße als Komponente B eingesetzte Glycerinbisfettsäureester sind vorstehend beschrieben. Sie werden in einer Menge von 0,01 bis 3 Gew.-%, vorzugsweise 0,2 bis 1,5 Gew.-%, besonders bevorzugt 0,2 bis 1,0 Gew.-% eingesetzt.

### Komponente C

Als Komponente C können die Formmassen 0 bis 49,99 Gew.-%, vorzugsweise 0 bis 40 Gew.-%, besonders bevorzugt 0 bis 30 Gew.-% mit Komponente A mischbare oder in ihr dispergierbare Blendpolymere enthalten. Dabei kann es sich beispielsweise um übliche (gepfropfte) Kautschuke handeln. Insbesondere können Pfropfcopolymere eingesetzt werden, die aus C₁₋₁₀-Alkylestern der Acrylsäure als Pfropfgrundlage und üblichen ethylenisch ungesättigten Monomeren als Pfropfauflage aufgebaut sein können.
Beispiele sind:
Ethylen-Vinylacetat-Kautschuke, Siliconkautschuke, Polyetherkautschuke, hydrierte Dienkautschuke, Polyalkenamerkautschuke, Acrylatkautschuke, Ethylen-Propylen-Kautschuke, Ethylen-Propylen-Dien-Kautschuke und Butylkautschuke, Methylmethacrylat-Butadien-Styrol (MBS)-Kautschuke, Methylmethacrylat-Butylacrylat-Styrol-Kautschuke, sofern diese mit der Komponente A mischbar bzw. in dieser dispergierbar sind. Bevorzugt werden Acrylatkautschuk, Ethylen-Propylen-(EP)-Kautschuk, Ethylen-Propylen-Dien(EPDM)-Kautschuk Verwendung finden. In Frage kommen ferner mischbare Polymere oder Copolymere wie Polycarbonate, Polymethacrylate, insbesondere PMMA, Polyphenylenether oder syndiotaktisches Polystyrol. In Frage kommen ferner Reaktivkautschuke, die an den Polyester (Komponente A) über eine kovalente Bindung anbinden, wie mit Säureanhydriden, wie Maleinsäureanhydrid, oder Epoxy-Verbindungen, wie Glycidyl-Methacrylat, gepfropfte Polyolefinkautschuke und/oder partikuäre Acrylatkautschuke. Schließlich ist auch die Verwendung eines oder mehrerer Pfropfcopolymere aus PBT und PSAN oder segmentierte Copolymere wie BlockCopolymere oder Multiblock-Copolymere aus mindestens einem Segment aus PBT mit M_{w} > 1000 und mindestens einem Segment aus PSAN oder einem mit PSAN verträglichen/mischbaren Segment mit M_{w} > 1000 möglich.

Die letztgenannten Polymere können auch zur besseren Anbindung von weiteren Blend-Polymeren, wie Copolymerisaten auf Basis von vinylaromatischen Monomeren und Acrylnitril und/oder Methacrylnitril dienen. Als derartige Blendkomponenten kommen (α-Methyl)Styrol/(Meth)Acrylnitril in Betracht.

### Komponente D

Die als Komponente D eingesetzten Füllstoffe können in einer Menge von 0 bis 50 Gew.-% vorliegen. Dabei handelt es sich vorzugsweise um Glasfasern, die kommerziell erhältlich sind. Diese haben im allgemeinen eine mittlere Länge von 0,1 bis 0,5 mm, vorzugsweise 0,1 bis 0,4 mm und einen Durchmesser im Bereich von 6 bis 20 µm. Besonders bevorzugt sind Glasfasern aus E-Glas. Zur Erzielung einer besseren Haftung können die Glasfasern mit Organosilanen, Epoxysilanen oder anderen Polymerüberzügen beschichtet sein.

### Komponente E

Die erfindungsgemäßen Formmassen können als Komponente E 0 bis 10 Gew.-%, vorzugsweise 0 bis 7,5 Gew.-%, besonders bevorzugt 0 bis 5 Gew.-% weiterer üblicher Zusatzstoffe enthalten.

Als solche Zusatzstoffe seien beispielsweise genannt: UV-Stabilisatoren, Oxidationsverzögerer, Farbstoffe, Pigmente, Färbemittel, Keimbildungsmittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere zusätzlich zu den erfindungsgemäßen Entformungsmitteln eingesetzte Schmier/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na, K, Cu).

Geeignete Stabilisatoren sind die üblichen gehinderten Phenole, aber auch Vitamin E bzw. analog aufgebaute Verbindungen. Auch HALS-Stabilisatoren (Hindered Amine Light Stabilizers), Benzophenone, Resorcine, Salicylate, Benzotriazole und andere Verbindungen sind geeignet (beispielsweise Irganox® Tinuvin®, wie Tinuvin®770 (HALS-Absorber, Bis (2,2,6,6-tetramethyl-4-piperidyl)sebacat) oder Tinuvin®P (UV-Absorber - (2H-Benzotriazol-2-yl)-4-methylphenol), Topanol®). Diese werden üblicherweise in Mengen bis zu 2 Gew.-% (bezogen auf das Gesamtgemisch) verwendet.

Auch Siliconöle, oligomeres Isobutylen oder ähnliche Stoffe kommen als Zusatzstoffe in Frage; die üblichen Mengen betragten 0,05 - 5 Gew.-%. Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar. Als Zusatzstoff kann ferner Ruß sowohl rein als auch als Masterbatch eingesetzt werden.

Verarbeitungshilfsmittel und Stabilisatoren wie UV-Stabilisatoren, Schmiermittel und Antistatika werden üblicherweise in Mengen von 0,01 bis 5 Gew.-% verwendet, bezogen auf die gesamte Formmasse.

Auch Keimbildungsmittel, wie Talkum, Calciumfluorid, Natriumphenylphosphinat, Aluminiumoxid oder feinteiliges Polytetrafluorethylen können in Mengen z. B. bis zu 5 Gew.-%, bezogen auf die gesamte Formmasse, angewandt werden. Weichmacher, wie Phthalsäuredioctylester, Phthalsäuredibenzylester, Phthalsäurebutylbenzylester, Kohlenwasserstofföle, N-(n-Butyl)benzolsulfonamid, o- und p-Toluolethylsulfonamid werden vorteilhaft in Mengen bis etwa 5 Gew.-%, bezogen auf die Formmasse, zugesetzt. Färbemittel, wie Farbstoffe und Pigmente können in Mengen bis zu etwa 5 Gew.-%, bezogen auf die Formmasse, zugesetzt werden.

Das Mischen der Komponenten A, B und gegebenenfalls C bis E kann nach jeder beliebigen Weise nach allen bekannten Methoden erfolgen. Beim Mischen können die Komponenten A - E als solche oder auch in Form von Mischungen der einen Komponente mit einer oder mehreren der anderen Komponenten eingesetzt werden. Die erfindungsgemäßen thermoplastischen Formmassen können beispielsweise hergestellt werden, indem man die Komponente A mit jeweils den Komponenten B und C oder mit einer Mischung aus diesen, und gegebenenfalls mit der Komponente E mischt, in einem Extruder aufschmilzt und die Glasfasern D über einen Einlaß am Extruder zuführt.

Die erfindungsgemäßen Formmassen können nach den bekannten Verfahren der Thermoplastverarbeitung zu Formteilen verarbeitet werden. Insbesondere kann deren Herstellung durch Thermoformen, Extrudieren, Spritzgießen, Kalandrieren, Hohlkörperblasen, Pressen, Preßsintern, Tiefziehen oder Sintern, vorzugsweise durch Spritzgießen erfolgen. Die aus den erfindungsgemäßen Formmassen herstellbaren Formteile sind ebenfalls Gegenstand der vorliegenden Erfindung.

Die thermoplastischen Formmassen können zur Herstellung von Formkörpern, Fasern oder Folien eingesetzt werden. Dabei entstammen die Formkörper vorzugsweise den Bereichen Haushalt, Lebensmittel oder Medizin. Im Haushaltsbereich können sie beispielsweise für Teile von Friteusen, wie Deckelteile und Griffe und im Gesundheitsbereich beispielsweise für Zahnbürstenköpfe oder Bürsten eingesetzt werden. *Ferner sind die erfindungsgemäßen thermoplastischen Formmassen für andere im Haushaltsbereich, vorzugsweise im Küchenbereich eingesetzte Formkörper geeignet. Hierzu zählen Brotbackmaschinen, Toaster, Tischgrills, Küchenmaschinen, elektrische Dosenöffner und Saftpressen. Bei diesen Gegenständen werden aus den erfindungsgemäßen Formmassen vorzugsweise Schalter, Gehäuse, Griffe und Deckel hergestellt. Weiterhin lassen sich die erfindungsgemäßen Formmassen für Formteile von Herden verwenden. Bei Herden sind Herdgriffe, Herdknöpfe und Schalter besonders bevorzugt.*

*Eine andere Verwendung der erfindungsgemäßen Formmassen liegt in Formteilen vor, die den Anforderungen der Federal Drug Administration oder vergleichbarer* *nationaler Behörden anderer Länder entsprechen. In diesem Bereich sind insbesondere Arzneimittelverpackungen und Gebinde für Arzneimittelkits bevorzugt.*

*Zudem lassen sich die erfindungsgemäßen Formmassen im Bereich der Lebensmittelverpackung einsetzen. Hier sind Formteile aus den erfindungsgemäßen Formmassen, wie Schachteln, Töpfe, Schalen und Behältnisse anderer Art bevorzugt.*

*Im Zusammenhang mit den Verwendungen der erfindungsgemäßen Formmassen ist insbesondere deren Lebensmittelechtheit und Fett- sowie Flüssigkeitsresistenz, die sich insbesondere bei Teilen von Haushaltsgeräten positiv auswirkt, hervorzuheben.*

*Besonders bewährt hat sich der Einsatz der vorstehend definierten Glycerinbisstearylester in Formmassen zur Herstellung von Formteilen, die hohen Temperaturbelastungen ausgesetzt sein können. Derartige Formteile sind insbesondere Scheinwerferteile, die in dem Bereich des Scheinwerfers eingesetzt werden, in dem während des Betriebs des Scheinwerfers Temperaturen über 100°C, bevorzugt 110°C und besonders bevorzugt 130°C und maximal bis 200°C auftreten können. Derartige Teile können sowohl glasfaserverstärkt als auch glasfaserunverstärkt sein. Bevorzugte Scheinwerferteile sind Scheinwerferrahmen.*

*Der Einsatz der vorstehenden Glycerinbisstearylester zur Herstellung von Scheinwerferteilen liegt insbesondere darin, daß bei derartigen Scheinwerferteilen mit reflektierender Oberfläche es zu keiner Ermattung dieser Oberflächen kommt. Weiterhin führt der Einsatz der vorstehend definierten Glycerinbisstearylester dazu, daß es auch bei längerem Betrieb des Scheinwerfers nicht zu Ablagerungen auf den transparenten Bereichen des Scheinwerfers, durch die das Licht tritt, kommt und die Reflektionseigenschaften von metallisierten Oberflächen dieser Formkörper erhalten bleiben.*

*Weiterhin bleiben die anderen vorteilhaften Eigenschaften, die mit dem Einsatz der vorstehend definierten Glycerinbisstearylester erzielt werden, wie niedrige Zykluszeiten, keine Formbelagsbildung bei der Spritzgußverarbeitung, hervorragende Qualität der metallisierten Oberflächen erhalten.*

*Insbesondere ist keine Eintrübung der metallisierten Oberfläche durch unkontrollierte Migration des Entformungsmittels bei Erwärmen des Formteils auf Temperaturen im Bereich von 100 - 200°C, bevorzugt von 110 - 180°C und besonders bevorzugt von 130 - 170°C zu beobachten, so daß Formteile mit metallisierten Oberflächen mit dauerhaften Reflektionseigenschaften erhalten werden können.*

*Ferner hat sich der Einsatz der vorstehend definierten Glycerinbisstearylester bei der Herstellung von großflächigen Formteilen, die im Verhältnis zu ihrer Fläche vergleichsweise dünn sind, bei denen ein hervorragendes Entformungsverhalten gefordert ist, bewährt. Derartige großflächige Formteile sind insbesondere Schiebedachtraversen, Karosserieteile, Lufteinlaßgitter, Teile von Instrumententafeln, wie Instrumententafelträger, Abdeckungen, Luftkanäle, Anbauteile, insbesondere für die Mittelkonsole als Teil des Handschuhfaches Tachohutzen*.

Weiterhin sind Anwendungen im Bereich der Medizintechnik möglich. Die erfindungsgemäßen Formmassen können auch in allen sonstigen bekannten Anwendungen für Polybutylenterephthalat zum Einsatz kommen, bei denen es nicht auf eine Verträglichkeit mit Lebensmitteln und dem menschlichen Körper ankommt.

Die Erfindung wird durch die nachstehenden Beispiele näher erläutert.

### Beispiele

Zur Herstellung der Formmassen wurde Polybutylenterephthalat (PBT) mit einer Viskositätszahl (VZ) von 130 eingesetzt. In den Referenzmassen wurde ein Vollester des Pentaerythrits als Entformungshilfsmittel eingesetzt, in den erfindungsgemäßen Formmassen Glycerinbisstearylester. In einem Teil der Massen wurden Glasfasern eingesetzt.

Die mechanischen Eigenschaften wurden wie folgt bestimmt:

Die Schlagzähigkeit wurde nach ISO 179/leU bestimmt. Die Kerbschlagzähigkeit wurde nach ISO 179/1eA bestimmt. Der E-Modul wurde nach ISO 527-2 bestimmt. Die Streckspannung wurde nach ISO 527-2 bestimmt. Die Bruchdehnung wurde nach ISO 527-2 bestimmt. Die Ergebnisse sind in den nachstehenden Tabellen aufgeführt.

**Tabelle 1:**

| Rezepturen (Angaben in Gew.-Tlen) | | | | |
|---|---|---|---|---|
| **Einsatzstoff** | **Referenz I** | **Formmasse I** | **Referenz II** | **Formmasse II** |
| PBT (VZ=130) | 99,35 | 99,35 | 79,48 | 79,48 |
| Glasfaser | - | - | 20 | 20 |
| Vollester des Pentaerythrits | 0,65 | | 0,52 | - |
| Glycerinbis-Stearylester | | 0,65 | - | 0,52 |

**Tabelle 2:**

| Prüfungen nach DIN/ISO | | | | | |
|---|---|---|---|---|---|
| Eigenschaft | Einheit | Referenz I | Formmasse I | Referenz II | Formmasse II |
| **Granulat** | | | | | |
| MVR250/2,16 | cm 3/10' | 24 | 26 | 17 | 17 |
| VZ | ml/g | 126 | 131 | 107 | 106 |
| max. Kristallisationstemperatur | °C | 185,3 | 185,7 | 186,1 | 184,1 |

| **Spritzguß** | | | | | |
|---|---|---|---|---|---|
| ISO 179/1eU | kJ/m² | 280 | NB | 56 | 54 |
| ISO 179/1eA | kJ/m² | 6 | 6 | 7 | 8 |
| E-Modul | MPa | 2500 | 2500 | 7700 | 7800 |
| Streckspannung | MPa | 57 | 57 | 118 | 119 |
| Bruchdehnung | % | 80 | 88 | 3,4 | 3,3 |
| minimale Zykluszeit ohne Entformungshilfsmittel | s s | 12,2 260/60*) | 11,7 260/60*) | 8,3 250/80*) | 9,5 250/280*) |
| | | | 22 | | 25 |
| Werkzeug-Belag nach 100 Schuß | visuell *) | 0 260/60 | 0 260/60 | 0 250/80 | 0 250/80 |
| Lagerung 11d/150°C | visuell ++) | - | + | - | + |
| FDA-konform | | nein | ja | Nein | Ja |

| | | | | | |
|---|---|---|---|---|---|
| *) Masse/Werkzeugoberflächentemperatur ++) Belag feststellbar = -, nicht feststellbar = + NB kein Bruch | | | | | |

## Patentansprüche

1. Verwendung von Glycerinbisfettsäureestern von C₁₂₋₂₄-Fettsäuren, wobei die Fettsäuren eine Hydroxylgruppe und 1 bis 3 C-C-Doppelbindungen aufweisen können, als Zusatz zu Fomimassen auf der Basis von Poly-C₂₋₆-alkylenterephthalaten.

2. Verwendung nach Anspruch 1 als Entformungshilfsmittel.

3. Verwendung nach Anspruch 1 oder 2, **dadurch gekennzeichnet, daß** sich die Glycerinbisfettsäureester von C₁₄₋₂₀-Fettsäuren ableiten.

4. Verwendung nach einem der Ansprüche 1 bis 3, **dadurch gekennzeichnet, daß** die Formmassen auf Polybutylenterephthalat-Blends basieren.

5. Thermoplastische Formmasse, enthaltend, bezogen auf die Summe der Komponenten A und B und gegebenenfalls C bis E, die insgesamt 100 Gew.-% ergibt,
a) 40 bis 99,99 Gew.-% mindestens eines Polyesters auf der Basis von Poly-C₂₋₆-alkylenterephthalaten als Komponente A,
b) 0,01 bis 3 Gew.-% Glycerinbisfettsäureester von C₁₂₋₂₄-Fettsäuren, wobei die Fettsäuren eine Hydroxylgruppe und 1 bis 3 C-C-Doppelbindungen aufweisen können, als Komponente B,
c) 0 - 49,99 Gew.-% mit Komponente A mischbare oder in ihr dispergierbare Blendpolymere als Komponente C,
d) 0 bis 50 Gew.-% Füllstoffe als Komponente D, und
e) 0 bis 10 Gew.-% weitere übliche Zusatzstoffe als Komponente E.

6. Thermoplastische Formmasse nach Anspruch 5, **dadurch gekennzeichnet, daß** Komponente A Polybutylenterephthalät ist.

7. Verfahren zur Herstellung von thermoplastischen Formmassen nach Anspruch 5 oder 6 durch Mischen der Komponenten.

8. Verwendung von thermoplastischen Formmassen nach Anspruch 5 oder 6 zur Herstellung von Formkörpern, Fasern oder Folien.

9. Formkörper, Fasern oder Folien aus einer thermoplastischen Formmasse nach Anspruch 5 oder 6.

## Revendications

1. Utilisation de bisesters d'acides gras en C₁₂-C₂₄ et de glycérine, les acides gras pouvant présenter un groupe hydroxyle et 1 à 3 doubles liaisons C-C, à titre d'addition à des masses de moulage à base de polytéréphtalates d'alkylène en C₂-C₆.

2. Utilisation suivant la revendication 1, comme adjuvant de démoulage.

3. Utilisation suivant l'une des revendications 1 et 2, **caractérisée en ce que** les bisesters d'acides gras et de glycérine dérivent d'acides gras en C₁₄-C₂₀.

4. Utilisation suivant l'une des revendications 1 à 3, **caractérisée en ce que** les masses de moulage sont à base d'un mélange de téréphtalates de polybutylène.

5. Masses de moulage thermoplastiques, contenant, par rapport à la somme des composants A et B et éventuellement C à E, qui correspond au total à 100% en poids,
a) 40 à 99,99% en poids d'au moins un polyester à base de polytéréphtalates d'alkylène en C₂-C₆, comme composant A,
b) 0,01 à 3% en poids de bisesters d'acides gras en C₁₂-C₂₄ et de glycérine, les acides gras pouvant présenter un groupe hydroxyle et 1 à 3 doubles liaisons C-C, comme composant B,
c) 0-49,99% en poids de polymères de mélange miscibles avec le composant A ou dispersables dans ce dernier, comme composant C,
d) 0 à 50% en poids de matières de remplissage, comme composant D, et
e) 0 à 10% en poids d'autres additifs courants, comme composant E.

6. Masses de moulage thermoplastiques suivant la revendication 5, **caractérisées en ce que** le composant A est du polytéréphtalate de butylène.

7. Procédé de préparation de masses de moulage thermoplastiques suivant l'une des revendications 5 et 6, par mélange des composants.

8. Utilisation de masses de moulage thermoplastiques suivant l'une des revendications 5 et 6, pour la fabrication de corps façonnés, de fibres ou de feuilles.

9. Corps façonnés, fibres ou feuilles à base d'une masse de moulage thermoplastique suivant l'une des revendications 5 et 6.

## Claims

1. The use of glycerol difatty acid esters of C₁₂-C₂₄ fatty acids which may have one hydroxyl group and from 1 to 3 carbon-carbon double bonds, as an additive for molding compositions based on poly-C₂-C₆-alkylene terephthalates.

2. The use as claimed in claim 1, as a mold-release agent.

3. The use as claimed in claim 1 or 2, wherein the glycerol difatty acid esters derive from C₁₄-C₂₀ fatty acids.

4. The use as claimed in any one of claims 1 to 3, wherein the molding compositions are based on polybutylene terephthalate blends.

5. A thermoplastic molding composition comprising, based on the total of components A and B and, if present, C to E, which together give 100% by weight,
a) as component A, from 40 to 99.99% by weight of at least one polyester based on poly-C₂-C₆-alkylene terephthalates,
b) as component B, from 0.01 to 3% by weight of glycerol difatty acid esters of C₁₂-C₂₄ fatty acids which may have a hydroxyl group and from 1 to 3 carbon-carbon double bonds,
c) as component C, from 0 to 49.99% by weight of blend polymers miscible with component A or dispersible therein,
d) as component D, from 0 to 50% by weight of fillers, and
e) as component E, from 0 to 10% by weight of other usual additives.

6. A thermoplastic molding composition as claimed in claim 5, wherein component A is polybutylene terephthalate.

7. A process for preparing thermoplastic molding compositions as claimed in claim 5 or 6, by mixing the components.

8. The use of thermoplastic molding compositions as claimed in claim 5 or 6 for producing moldings, fibers or films.

9. A molding, a fiber or a film made from a thermoplastic molding composition as claimed in claim 5 or 6.
